# EUROPEAN PATENT APPLICATION

(11) **EP 1 526 738 A2**
(43) Date of publication of application: **27.04.2005**
(21) Application number: 04256544.0
(22) Date of filing: 22.10.2004
(51) Int. Cl.: H04N 7/34

(54) **Intra prediction method and apparatus**

(30) Priority: 24.10.2003 KR 2003074679
(71) Applicant: Samsung Electronics Co., Ltd., Suwon-si, Gyeonggi-do (KR)
(72) Inventor: Yoo, Ki-won, Seoul (KR); Kim, Hyung-ho, Seoul (KR)
(74) Representative: Brandon, Paul Laurence

(57) **Abstract**

Provided are an intra prediction method and apparatus. The intra prediction method includes: determining at least one sub-block on which intra prediction is to be performed, on the basis of intra prediction processing operation information on a macro block; and performing intra prediction on the determined at least one sub-block and updating the intra prediction processing operation information.

## Description

The present invention relates to intra prediction methods and apparatus used when image encoding or decoding is performed, and more particularly, to intra prediction methods and apparatus capable of enhanced intra prediction speed.

When image encoding or decoding is performed, 9 intra prediction modes exist according to the H.264 standard, which is a layer of the Motion Picture Expert Group (MPEG) 4 standard provided for low bitrate transmission.

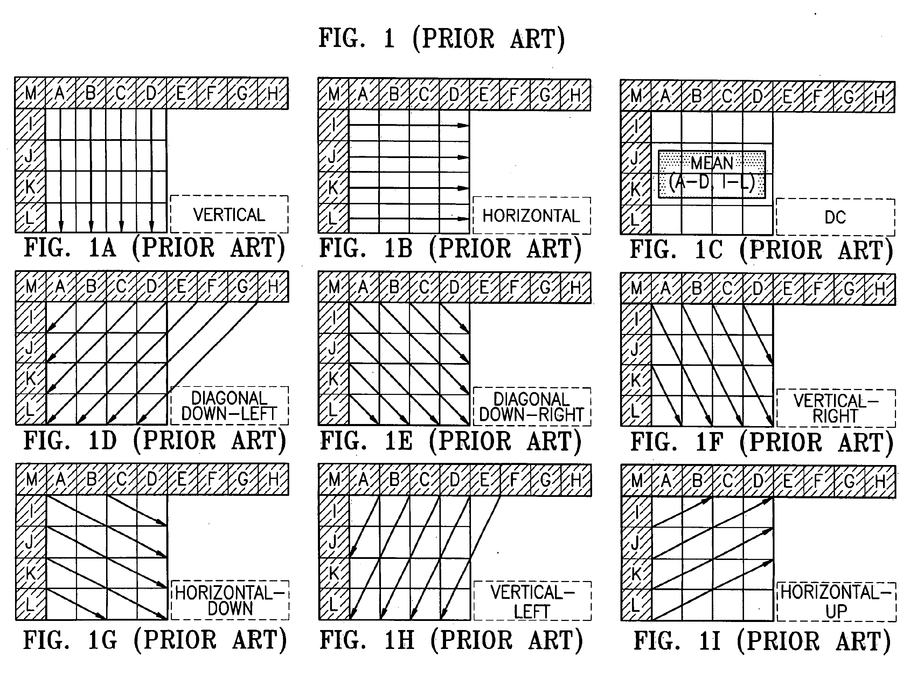

The 9 intra prediction modes include a vertical mode, a horizontal mode, a direct current (DC) mode, a diagonal down-left mode, a diagonal down-right mode, a vertical-right mode, a horizontal-down mode, a vertical-left mode, and a horizontal-up mode as shown in FIGS. 1A-1I.

In the intra prediction modes, on the basis of a block on which intra prediction is to be performed, adjacent pixels of the same frame including the block are used as reference pixels as shown in FIGS. 1A-1I. FIGS. 1A-1I illustrate cases of using adjacent pixels of a same frame on the basis of a 4X4 sub-block, wherein alphabet capital letters indicate the adjacent pixels used when the intra prediction is performed.

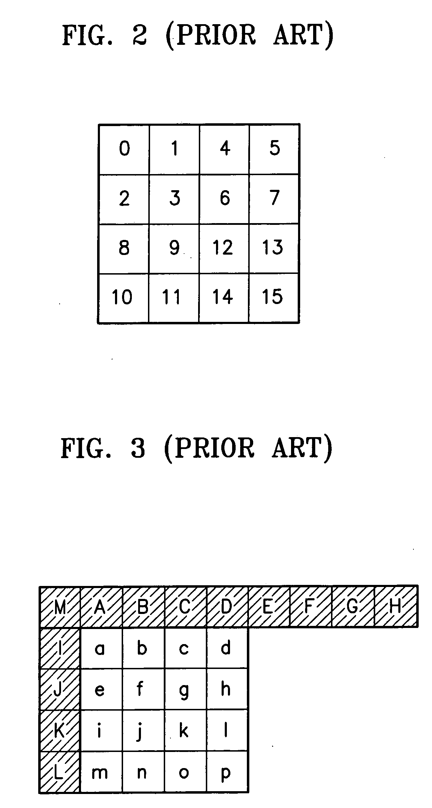

If an image signal is input in units of 16X16 macro blocks for encoding, the 16X16 macro block is divided into 16 4X4 sub-blocks. Intra prediction is performed by scanning the 4X4 sub-blocks in the scanning order shown in FIG. 2. Numbers shown in FIG. 2 indicate the scanning order of the 4X4 sub-blocks when intra prediction is performed. The scanning order is defined in the H.264 standard.

The adjacent pixels used for performing intra prediction on the 4X4 sub-blocks are indicated with capital letters of the alphabet in FIG. 3, wherein pixels I, J, K, and L are included in a 4X4 sub-block adjacent to the left of a 4X4 sub-block on which intra prediction is to be performed, a pixel M is included in a 4X4 sub-block adjacent to the top-left of the 4X4 sub-block on which intra prediction is to be performed, pixels A, B, C, and D are included in a 4X4 sub-block adjacent to the top of the 4X4 sub-block on which intra prediction is to be performed, and pixels E, F, G, and H are included in a 4X4 sub-block adjacent to the top-right of the 4X4 sub-block on which intra prediction is to be performed. A region indicated with small letters of the alphabet in FIG. 3 is the 4X4 sub-block on which intra prediction is to be performed.

However, in the intra prediction of the 4X4 sub-block, only the 4X4 sub-blocks included in the 16X16 macro block are used. Therefore, reference sub-blocks required when the intra prediction of the 4X4 sub-block is performed in the scanning order shown in FIG. 2 are as defined in Table 1.

**[Table 1]**

| 4X4 sub-block index | Reference 4X4 sub-block index | 4X4 sub-block index | Reference 4X4 sub-block index |
|---|---|---|---|
| 0 | none | 8 | 2, 3 |
| 1 | 0 | 9 | 2, 3, 6, 8 |
| 2 | 0, 1 | 10 | 8, 9 |
| 3 | 0, 1, 2 | 11 | 8, 9, 10 |
| 4 | 1 | 12 | 3, 6, 7, 9 |
| 5 | 4 | 13 | 6, 7, 12 |
| 6 | 1, 3, 4, 5 | 14 | 9, 11, 12, 13 |
| 7 | 4, 5, 6 | 15 | 12, 13, 14 |

The 4X4 sub-block index used in Table 1 is the scanning order defined in FIG. 2.

Likewise, the intra prediction of the 16X16 macro block in units of 4X4 sub-blocks is performed in 16 operations. In particular, when image encoding is performed, since an optimum prediction mode is determined by performing the 9 intra prediction modes defined in the H.264 standard in units of 4X4 sub-blocks, much is required for intra prediction.

At least one embodiment of the present invention aims to provides an intra prediction method and apparatus allowing intra prediction speed to be enhanced by reducing the number of processing operations in intra prediction in units of sub-blocks when image encoding or decoding is performed.

At least one embodiment of the present invention aims to provide an intra prediction method and apparatus that increase intra prediction speed by reforming the scanning order of sub-blocks on which intra prediction is to be performed when image encoding or decoding is performed.

At least one embodiment of the present invention aims to provide an intra prediction method and apparatus that increase intra prediction speed when image encoding or decoding is performed by determining sub-blocks on which intra prediction is to be performed on the basis of a point of time when the intra prediction of reference sub-blocks required for the intra prediction is finished.

According to an aspect of the present invention, there is provided an intra prediction method including: determining at least one sub-block on which intra prediction is to be performed, on the basis of intra prediction processing operation information on a macro block; and performing intra prediction on the determined at least one sub-block and updating the intra prediction processing operation information.

According to another aspect of the present invention, there is provided an intra prediction method including: determining at least one sub-block on which intra prediction is to be performed, on the basis of intra prediction processing operation information of a macro block; detecting an intra prediction sample by performing the intra prediction of the determined at least one sub-block; generating a reformed pixel value as a pixel value of a reference sub-block for a next intra prediction processing operation, when a pixel value of the determined at least one sub-block is reformed by adding a residual value of the determined at least one sub-block to the detected intra prediction sample; and updating the intra prediction processing operation information when the pixel value of the reference sub-block is generated.

According to another aspect of the present invention, there is provided an intra prediction apparatus usable when image encoding is performed, including: an intra prediction processing unit which determines at least one sub-block on which intra prediction is to be performed, on the basis of intra prediction processing operation information of a macro block, performs the intra prediction of the determined at least one sub-block on which intra prediction is to be performed, and outputs an intra prediction mode and intra prediction sample; an adder which adds a residual value of the determined at least one sub-block to the intra prediction sample; a reference pixel generator which reforms a pixel value of the determined at least one sub-block using a signal output from the adder and generates the reformed pixel value as a pixel value of a reference sub-block for a next intra prediction processing operation; and an intra prediction processing operation information provider which, when the pixel value of the reference sub-block is generated by the reference pixel generator, updates the intra prediction processing operation information.

According to another aspect of the present invention, there is provided an intra prediction apparatus usable when image decoding is performed, including: an intra prediction processing unit which determines at least one sub-block, on which intra prediction is to be performed, on the basis of intra prediction processing operation information of a macro block, performs intra prediction of the determined at least one sub-block on which intra prediction is to be performed, and outputs at least one corresponding intra prediction sample; an adder which adds a residual value of the determined at least one sub-block to the intra prediction sample; a reference pixel generator which reforms a pixel value of the determined at least one sub-block using a signal output from the adder and generates the reformed pixel value as a pixel value of a reference sub-block for a next intra prediction processing operation; and an intra prediction processing operation information provider which, when the pixel value of the reference sub-block is generated by the reference pixel generator, updates the intra prediction processing operation information.

According to another aspect of the present invention, there is provided a method of increasing intra prediction speed, including: determining, on the basis of intra prediction processing operation information of a macro block, a sub-block on which intra prediction is to be performed; performing intra prediction of the determined sub-block using at least one intra prediction mode so as to detect intra prediction samples thereof; calculating sum absolute errors (SAE) for each of the at least one intra prediction modes using each of the detected intra prediction samples and a current pixel value of a corresponding sub-block; detecting a minimum SAE value from among the SAE values; adding an intra prediction sample which has the minimum SAE value and a corresponding residual value; reforming a pixel value of the determined sub-block using the added value; generating a pixel value of a reference sub-block for a next intra prediction processing operation using the reformed pixel value; and updating the intra prediction processing operation information of the macro block using the reformed pixel.

According to another aspect of the present invention, there is provided an intra prediction method, including: determining, on the basis of intra prediction processing operation information on a macro block, at least one sub-block on which intra prediction is to be performed; performing intra prediction on the determined at least one sub-block to yield an intra prediction sample; reforming a pixel value of the determined at least one sub-block by adding a residual value of the determined at least one sub-block to the intra prediction sample; generating a reformed pixel value as a pixel value of a reference sub-block for a next intra prediction processing operation; and updating the intra prediction processing operation information on the pixel value of the reference sub-block.

Further features of the present invention are set out in the appended claims.

The present invention will become apparent and more readily appreciated from the following detailed description, by way of example only, taken in conjunction with the accompanying drawings of which:
FIGS. 1A-1I illustrate nine conventionally defined intra prediction modes;
FIG. 2 is a conventionally defined scanning order diagram of 4X4 sub-blocks in a 16X16 macro block;
FIG. 3 illustrates correlation between a sub-block on which intra prediction is to be performed made up of 4X4 pixels and reference pixels required when the intra prediction is performed;
FIG. 4 is a block diagram of an intra prediction apparatus in encoding according to an embodiment of the present invention;
FIG. 5 shows sub-blocks on which intra prediction is to be performed in each operation of intra prediction processing when 10-operation intra prediction processing of a 16X16 macro block is performed according to an embodiment of the present invention;
FIG. 6 is a scanning order diagram of 4X4 sub-blocks included in the 16X16 macro block, wherein the scanning order is based on the intra prediction processing operations illustrated in FIG. 5;
FIG. 7 is a flowchart of an intra prediction method when image encoding is performed according to an embodiment of the present invention;
FIGS. 8A and 8B are scanning order diagrams of a macro block, wherein the scanning orders are based on intra prediction processing operations according to another embodiment of the present invention;
FIG. 9 is a block diagram of an intra prediction apparatus in an image decoding apparatus according to an embodiment of the present invention; and
FIG. 10 is a flowchart of an intra prediction method used when image decoding is performed according to an embodiment of the present invention

Reference will now be made in detail to embodiments of the present invention, examples of which are illustrated in the accompanying drawings, wherein like reference numerals refer to the like elements throughout. The embodiments are described below to explain the present invention by referring to the figures.

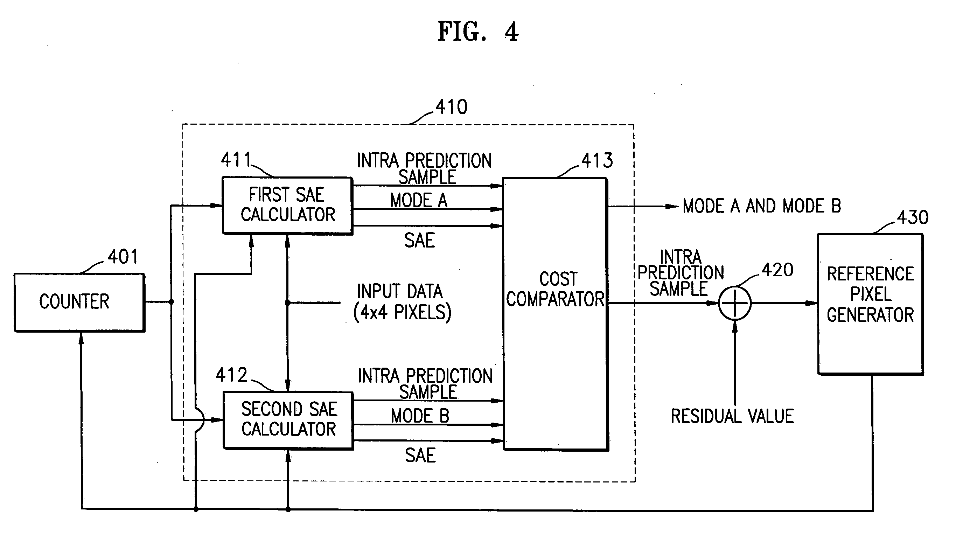

FIG. 4 is a block diagram of an intra prediction apparatus in image encoding according to an embodiment of the present invention. In FIG. 4, the intra prediction apparatus is described as an applied image signal in which a 16X16 macro block is divided into 4X4 sub-blocks. Referring to FIG. 4, the intra prediction apparatus includes a counter 401, an intra prediction processing unit 410, an adder 420 and a reference pixel generator 430.

The counter 401 sets intra prediction processing operations of a 16X16 macro block (hereinafter, macro block). That is, the counter 401 updates a count value of each of the intra prediction processing operations of the macro block whenever a pixel value of a reference sub-block is generated by the reference pixel generator 430. If the counter 401 is an up-counter, the update is performed so that the count value is going up, and if the counter 401 is a down-counter, the update is performed so that the count value is going down.

The count value of each of the intra prediction processing operations is defined as intra prediction processing operation information. Therefore, the counter 401 can be defined as an intra prediction processing operation information provider. The intra prediction processing operation information output from the counter 401 is output to the intra prediction processing unit 410.

The intra prediction processing unit 410 determines at least one sub-block among 4X4 sub-blocks included in the macro block as a sub-block on which intra prediction is to be performed, performs intra prediction of the determined sub-block on which intra prediction is to be performed in a plurality of intra prediction modes, and outputs an optimum intra prediction mode and an intra prediction sample.

The intra prediction processing unit 410 includes a first sum absolute error (SAE) calculator 411, a second SAE calculator 412 and a cost comparator 413.

The first SAE calculator 411 determines a sub-block on which intra prediction is to be performed on the basis of the intra prediction processing operation information output from the counter 401. The sub-block on which intra prediction is to be performed, which can be determined by the first SAE calculator 411 on the basis of the intra prediction processing operation information, can be set in advance as shown in Table 2.

**[Table 2]**

| Intra prediction processing operation | Index of a sub-block on which intra prediction is to be performed | Intra prediction processing operation | Index of a sub-block on which intra prediction is to be performed |
|---|---|---|---|
| 1 | 0 | 6 | 7, 9 |
| 2 | 1 | 7 | 10, 12 |
| 3 | 2, 4 | 8 | 11, 13 |
| 4 | 3, 5 | 9 | 14 |
| 5 | 6, 8 | 10 | 15 |

Table 2 shows a case of performing intra prediction on the macro block in 10 operations according to the present invention. In Table 2, the index of a sub-block is an index of the 4X4 sub-blocks of the macro block shown in FIG. 2.

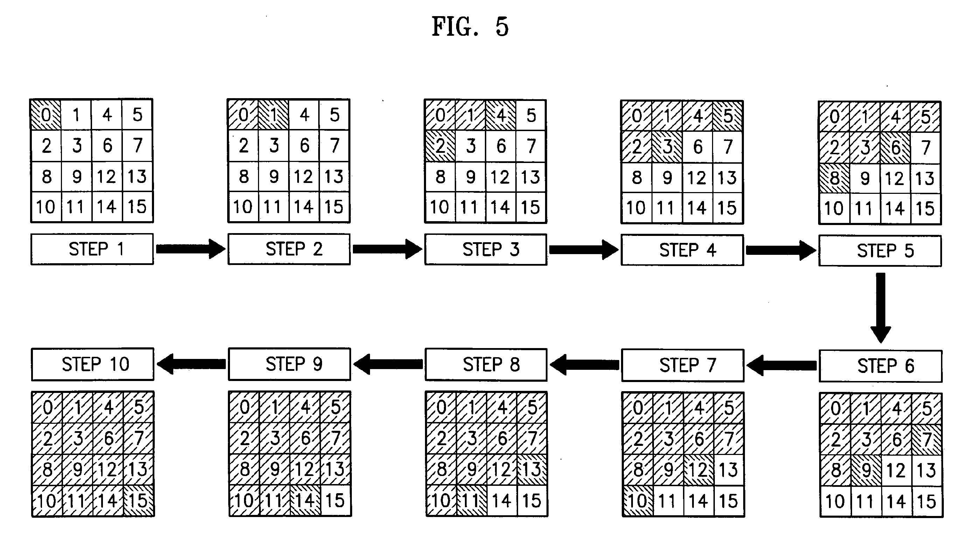

If the intra prediction processing operation information output from the counter 401 is "1," the first SAE calculator 411 determines a 4X4 sub-block, the index of which is "0," of the 16X16 macro block as the sub-block on which intra prediction is to be performed as shown in "operation 1" of FIG. 5. FIG. 5 shows sub-blocks obtained in each operation of intra prediction processing when 10-operation intra prediction processing of a 16X16 macro block is performed according to an embodiment of the present invention.

The second SAE calculator 412 determines a sub-block on which intra prediction is to be performed on the basis of the intra prediction processing operation information output from the counter 401 like the first SAE calculator 411. However, in a case where the intra prediction processing is performed with 10 operations as illustrated in Table 2 and FIG. 5, the number of sub-blocks on which intra prediction is to be performed in intra prediction processing operations 1, 2, 9, and 10 is 1, and the number of sub-blocks on which intra prediction is to be performed in intra prediction processing operations 3 through 8 is 2.

Therefore, when the intra prediction processing operation information output from the counter 401 is "1," "2," "9," or "10," the first SAE calculator 411 operates and the second SAE calculator 412 does not operate.

If the sub-block(s) on which intra prediction is to be performed are determined according to intra prediction processing operation information, the first SAE calculator 411 and the second SAE calculator 412 perform intra prediction of the determined sub-block(s) on which intra prediction is to be performed in the 9 intra prediction modes as shown in FIGS. 1A-1I.

Each of the first SAE calculator 411 and the second SAE calculator 412 detects an SAE of each intra prediction mode using intra prediction samples obtained by performing the 9 intra prediction modes and a current pixel value (4X4 pixel value) of a corresponding sub-block. Each of the first SAE calculator 411 and the second SAE calculator 412 outputs the detected SAE of each intra prediction mode, intra prediction mode information (a mode A in a case of the first SAE calculator 411 and a mode B in a case of the second SAE calculator 412), and a corresponding intra prediction sample to the cost comparator 413.

The cost comparator 413 independently compares the SAEs received from the first SAE calculator 411 and the second SAE calculator 412, outputs intra prediction modes, each mode having a minimum SAE, as optimum intra prediction mode information (the mode A and the mode B) of the corresponding sub-blocks on which intra prediction is to be performed, and outputs the intra prediction samples detected in each of the optimum intra prediction modes as intra prediction samples of the respective corresponding sub-blocks on which intra prediction is to be performed. The cost comparator 413 sequentially outputs the intra prediction mode information of each sub-block on which intra prediction is to be performed and the intra prediction sample.

The intra prediction mode information (the mode A and the mode B) is used when image decoding is performed.

The intra prediction sample of each sub-block on which intra prediction is to be performed is output to the adder 420.

The adder 420 adds the intra prediction sample to a residual value of a corresponding sub-block on which intra prediction is to be performed. The residual value is the difference between a predicted pixel value of the corresponding sub-block and a currently input pixel value.

The reference pixel generator 430 reforms a pixel value of the corresponding sub-block on which intra prediction is to be performed using the result of the addition output from the adder, stores the reformed pixel value, and generates the reformed pixel value as a pixel value of a reference sub-block for a next intra prediction processing operation. The generated pixel value is output to the first SAE calculator 411 and the second SAE calculator 412 included in the intra prediction processing unit 410.

Whenever the pixel value of the reference sub-block is generated, the reference pixel generator 430 generates a signal notifying that the pixel value of the reference sub-block is generated to the counter 401. Accordingly, the counter 401 updates the intra prediction processing operation information by updating the count value.

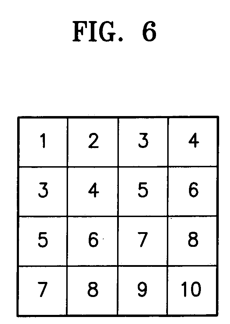

According to the intra prediction processing, a scanning order of sub-blocks, each sub-block including 4X4 pixels, included in the 16X16 macro block is redefined as shown in FIG. 6.

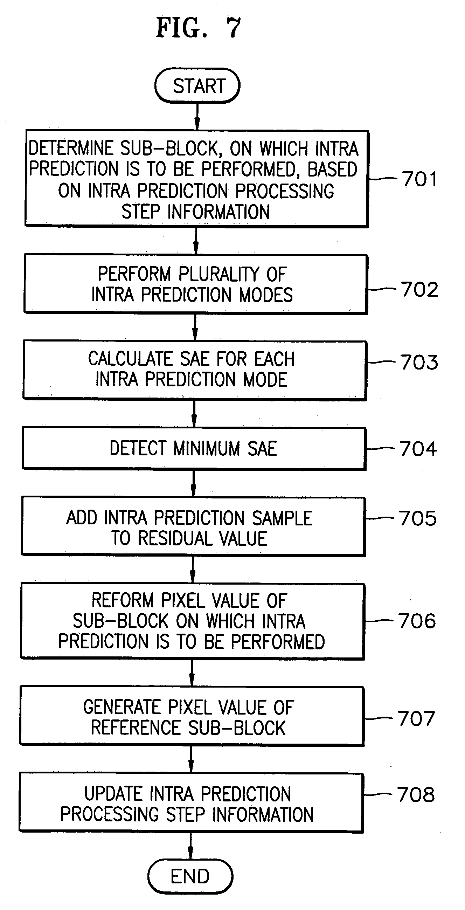

FIG. 7 is a flowchart of an intra prediction method when image encoding is performed according to an embodiment of the present invention.

In operation 701, a sub-block on which intra prediction is to be performed is determined on the basis of intra prediction processing operation information of a macro block. At this time, a plurality of sub-blocks on which intra prediction is to be performed can be determined according to the intra prediction processing operation information. For example, if intra prediction processing is performed like in Table 2 and FIG. 5, and if current intra prediction processing operation information is "3," a sub-block, an index of which is "3," and a sub-block, an index of which is "5," in the macro block are determined as the sub-blocks on which intra prediction is to be performed.

The sub-block on which intra prediction is to be performed is determined on the basis of what is described in FIG. 4. That is, a sub-block, for which the intra prediction of reference sub-blocks required for the intra prediction is finished, among sub-blocks included in the macro block is determined as the sub-block on which intra prediction is to be performed.

In operation 702, intra prediction samples are detected by performing intra prediction of the determined sub-block on which intra prediction is to be performed in the 9 intra prediction modes as in FIGS. 1A-1I.

In operation 703, each of SAEs according to the intra prediction modes is calculated using each of the intra prediction samples detected according to the intra prediction modes and a current pixel value of a corresponding sub-block.

In operation 704, a minimum SAE is detected among the SAEs according to the intra prediction modes for the sub-block on which intra prediction is to be performed.

In operation 705, an intra prediction sample detected in an intra prediction mode, which has the minimum SAE value, and a corresponding residual value are added.

In operation 706, a pixel value of a sub-block on which intra prediction is to be performed using the added value is reformed.

In operation 707, the reformed pixel value is generated as a pixel value of a reference sub-block for a next intra prediction processing operation.

In operation 708, the intra prediction processing operation information of the macro block is updated.

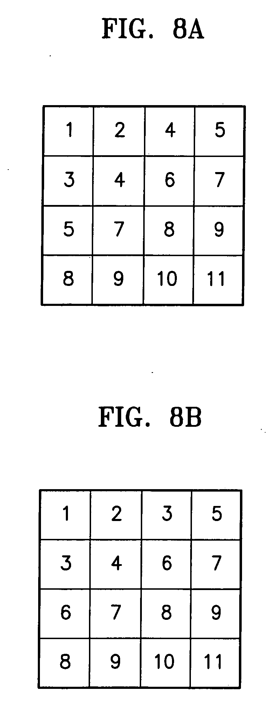

FIGS. 8A and 8B are scanning order diagrams of a macro block, wherein the scanning orders are based on intra prediction processing operations according to another embodiment of the present invention.

FIGS. 8A and 8B commonly show a case where, when a plurality of sub-blocks can be determined as a sub-block on which intra prediction is to be performed like in Table 2 and FIG. 5, intra prediction of one sub-block is processed by being delayed for one intra prediction processing operation than intra prediction processing of another sub-block. Therefore, the intra prediction processing is performed with 11 operations, which is different than FIG. 5.

FIG. 8A shows that sub block(s) on which intra prediction is to be performed are determined by such intra prediction processing operations as Table 3. That is, compared to Table 2, FIG. 8A shows a case where scanning order of the macro block is defined so as to determine the sub block(s) on which intra prediction is to be performed at a point of time when one intra prediction processing operation is delayed and so as not to determine the sub block (s) on which intra prediction is to be performed as soon as intra prediction of reference sub-block(s) required for the intra prediction is finished.

**[Table 3]**

| Intra prediction processing operation | Index of a sub-block on which intra prediction is to be performed | Intra prediction processing operation | Index of a sub-block on which intra prediction is to be performed |
|---|---|---|---|
| 1 | 0 | 7 | 7, 9 |
| 2 | 1 | 8 | 10, 12 |
| 3 | 2 | 9 | 11, 13 |
| 4 | 3, 4 | 10 | 14 |
| 5 | 5, 8 | 11 | 15 |
| 6 | 6 | | |

FIG. 8B shows a case where scanning order of the macro block is defined so as to determine the sub block(s) for intra prediction with such intra prediction processing operations as listed in Table 4.

**[Table 4]**

| Intra prediction processing operation | Index of a sub-block on which intra prediction is to be performed | Intra prediction processing operation | Index of a sub-block on which intra prediction is to be performed |
|---|---|---|---|
| 1 | 0 | 7 | 7, 9 |
| 2 | 1 | 8 | 10, 12 |
| 3 | 2, 4 | 9 | 11, 13 |
| 4 | 3 | 10 | 14 |
| 5 | 5 | 11 | 15 |
| 6 | 6, 8 | | |

In both of FIGS. 8A and 8B, 11 intra prediction processing operations are performed, however, the sub blocks on which intra prediction is to be performed selected in the intra prediction processing operations 3, 4, 5, and 6 are different from each other.

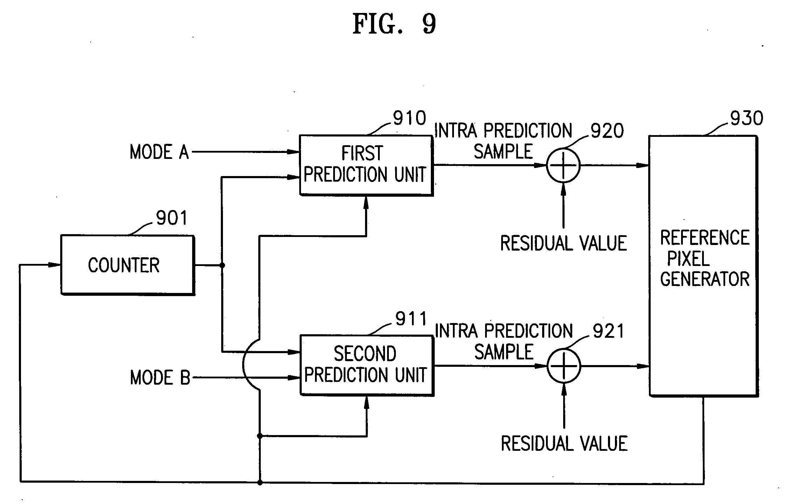

FIG. 9 is a block diagram of an intra prediction apparatus in an image decoding apparatus according to an embodiment of the present invention. Referring to FIG. 9, the intra prediction apparatus includes a counter 901, a first prediction unit 910, a second prediction unit 911, a first adder 920, a second adder 921, and a reference pixel generator 930.

The counter 901 may be the same as the counter 401 of FIG. 4.

The first prediction unit 910 determines a sub block on which intra prediction is to be performed on the basis of intra prediction processing operation information. The determination of the sub block on which intra prediction is to be performed may be the same as that in the first SAE calculator 411.

The first prediction unit 910 performs the intra prediction of a currently determined sub block on which intra prediction is to be performed using input mode A information and a pixel value of a reference sub-block output from the reference pixel generator 930. At this time, the intra prediction is performed in an intra prediction mode corresponding to the input mode A information among such 9 intra prediction modes as listed in FIGS. 1A-1I.

For example, if the mode A is a vertical mode, the first prediction unit 910 performs the intra prediction according to the vertical mode for the determined sub block on which intra prediction is to be performed. Accordingly, the first prediction unit 910 outputs an intra prediction sample corresponding to the determined sub block on which intra prediction is to be performed.

The second prediction unit 911 determines a sub block on which intra prediction is to be performed like in the second SAE calculator 412 and outputs an intra prediction sample corresponding to the determined sub block on which intra prediction is to be performed by performing the same operation as the first prediction unit 910.

The first adder 920 adds the intra prediction sample output from the first prediction unit 910 to a corresponding residual value and outputs the result of the addition.

The second adder 921 adds the intra prediction sample output from the second prediction unit 911 to a corresponding residual value and outputs the result of the addition.

The reference pixel generator 930 reforms a pixel value of the corresponding sub-block on which intra prediction is to be performed using the results of addition output from the first adder 920 and the second adder 921 and generates the reformed pixel value as a pixel value of a reference sub-block for a next intra prediction processing operation. The generated pixel value of the reference sub-block is output to the first prediction unit 910 and the second prediction unit 911.

Whenever the pixel value of the reference sub-block is generated, the reference pixel generator 930 generates information notifying that the pixel value of the reference sub-block is generated to the counter 901.

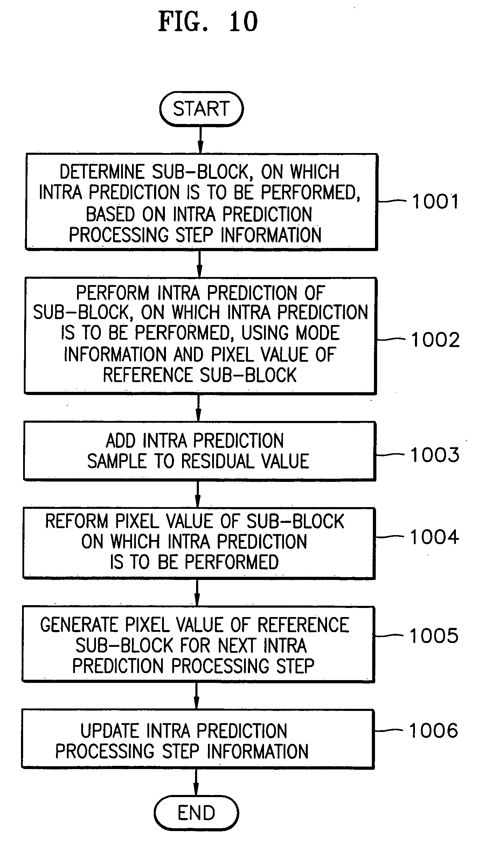

FIG. 10 is a flowchart of an intra prediction method used when image decoding is performed according to an embodiment of the present invention.

In operation 1001, a sub-block on which intra prediction is to be performed is determined on the basis of intra prediction processing operation information. The determining of the sub-block on which intra prediction is to be performed is the same as operation 701 of FIG. 7.

In operation 1002, an intra prediction sample is generated by performing intra prediction of the sub-block on which intra prediction is to be performed determined in operation 1001 using an intra prediction mode obtained on the basis of input mode information and a pixel value of a reference sub-block.

In operation 1003, the generated intra prediction sample and a residual value of a corresponding sub-block are added.

In operation 1004, a pixel value of the sub-block is reformed using the result of the addition.

In operation 1005, the reformed pixel value is generated as a pixel value of a reference sub-block for a next intra prediction processing operation.

In operation 1006, the intra prediction processing operation information is updated.

As described above, when image encoding or decoding is performed, since intra prediction is performed by determining at least one sub-block on which intra prediction is to be performed on the basis of a point of time when the intra prediction of all reference sub-blocks required for the intra prediction in units of sub-blocks is finished, intra prediction processing operations can be reduced compared to a conventional method, and accordingly, processing time for the intra prediction can be reduced. According to experiments, in a case where the intra prediction processing operations of a 16X16 macro block are reduced to 10 operations like in the embodiment described above, about 38% of the processing time for the intra prediction is reduced compared to the conventional method.

Although a few embodiments of the present invention have been shown and described, the present invention is not limited to the described embodiments. Instead, it would be appreciated by those skilled in the art that changes may be made in these embodiments without departing from the principles and spirit of the invention, the scope of which is defined by the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An intra prediction method comprising:
determining at least one sub-block on which intra prediction is to be performed, on the basis of intra prediction processing operation information of a macro block; and
performing intra prediction on the determined at least one sub-block and updating the intra prediction processing operation information.

2. The method of claim 1, wherein the determined at least one sub-block is a sub-block for which intra prediction of all reference sub-blocks required for the intra prediction of the determined at least one sub-block is finished, and is included in the macro block.

3. The method of claim 2, wherein, when the determined at least one sub-block is more than 1, the determined sub-blocks are determined so that intra prediction processing of some of the determined sub-blocks is delayed for at least one intra prediction processing operation with respect to intra prediction processing of others of the sub-blocks.

4. The method of claims 1, further comprising:
detecting an intra prediction sample by performing the intra prediction of the determined at least one sub block;
generating a reformed pixel value as a pixel value of a reference sub-block for a next intra prediction processing operation, when a pixel value of the determined at least one sub-block is reformed by adding a residual value of the determined at least one sub-block to the detected intra prediction sample; and
updating the intra prediction processing operation information when the pixel value of the reference sub-block is generated.

5. The method of claim 4, wherein the determined at least one sub-block is determined with reference to previously set sub-block indexes corresponding to the intra prediction processing operation information.

6. The method of claim 5, wherein, when the intra prediction of the determined at least one sub-block is performed, the sub-block indexes are indexes of sub-blocks for which intra prediction of all reference sub-blocks required in the macro block is finished.

7. The method of claim 6, wherein, when the intra prediction of the determined at least one sub-block is performed, some of the sub-block indexes are set so that the intra prediction is processed at a point of time when at least one intra prediction processing operation is delayed after the intra prediction of all reference sub-blocks required in the macro block is finished.

8. An intra prediction apparatus usable when image encoding is performed, comprising:
an intra prediction processing unit (410) which determines at least one sub-block on which intra prediction is to be performed, on the basis of intra prediction processing operation information of a macro block, performs the intra prediction of the determined at least one sub-block on which intra prediction is to be performed, and outputs an intra prediction mode and intra prediction sample;
an adder (420, 921, 921) which adds a residual value of the determined at least one sub-block to the intra prediction sample;
a reference pixel generator (430, 930) which reforms a pixel value of the determined at least one sub-block using a signal output from the adder (420, 920, 921) and generates the reformed pixel value as a pixel value of a reference sub-block for a next intra prediction processing operation; and
an intra prediction processing operation information provider (401, 901) which, when the pixel value of the reference sub-block is generated by the reference pixel generator (430, 930), updates the intra prediction processing operation information.

9. The apparatus of claim 8, wherein the intra prediction processing unit (410) determines at least one sub-block, for which intra prediction of all reference sub-blocks required for the intra prediction of the sub-block on which intra prediction is to be performed is finished, among sub-blocks included in the macro block as the determined at least one sub-block.

10. The apparatus of claim 9, wherein, when the determined at least one sub-block is more than 1, the intra prediction processing unit (410) determines the sub-blocks on which intra prediction is to be performed so that intra prediction processing of some of the determined sub-blocks is delayed for at least one intra prediction processing operation with respect to intra prediction processing of others of the sub-blocks.

11. The apparatus of claim 8, wherein the intra prediction processing unit (410) comprises:
a first sum absolute error (SAE) calculator (411), which determines a first sub-block, on which intra prediction is to be performed, on the basis of the intra prediction processing operation information, performs intra prediction of the first sub-block in a plurality of intra prediction modes using pixel values of the reference sub-blocks, and calculates a first SAE for each of the plurality of intra prediction modes;
a second SAE calculator (412), which determines a second sub-block, on which intra prediction is to be performed, on the basis of the intra prediction processing operation information, performs intra prediction of the second sub-block in a plurality of intra prediction modes using pixel values of the reference sub-blocks, and calculates a second SAE for each of the plurality of intra prediction modes; and
a cost comparator (413), which independently compares a plurality of the first SAEs and a plurality of the second SAEs and outputs the intra prediction modes and the intra prediction samples for the first sub-block and the second sub-block, respectively.

12. An intra prediction apparatus usable when image decoding is performed, comprising:
an intra prediction processing unit (410) which determines at least one sub-block, on which intra prediction is to be performed, on the basis of intra prediction processing operation information of a macro block, performs intra prediction of the determined at least one sub-block on which intra prediction is to be performed, and outputs at least one corresponding intra prediction sample;
an adder (420, 920, 921) which adds a residual value of the determined at least one sub-block to the intra prediction sample;
a reference pixel generator (430, 930) which reforms a pixel value of the determined at least one sub-block using a signal output from the adder (420, 920, 921) and generates the reformed pixel value as a pixel value of a reference sub-block for a next intra prediction processing operation; and
an intra prediction processing operation information provider (401, 901) which, when the pixel value of the reference sub-block is generated by the reference pixel generator, updates the intra prediction processing operation information.

13. The apparatus of claim 12, wherein the intra prediction processing unit (410) determines at least one sub-block, for which intra prediction of all reference sub-blocks required for the intra prediction of the sub-block on which intra prediction is to be performed is finished, among sub-blocks included in the macro block as the determined at least one sub-block.

14. The apparatus of claim 13, wherein, when the determined at least one sub-block is more than 1, the intra prediction processing unit (410) determines the sub-blocks on which intra prediction is to be performed so that intra prediction processing of some sub-blocks is delayed for at least one intra prediction processing operation with respect to intra prediction processing of others of the sub-blocks.

15. The method of claim 12, wherein the intra prediction processing unit includes:
a first prediction unit (910) which determines a first sub-block on which intra prediction is to be performed, on the basis of the intra prediction processing operation information and outputs an intra prediction sample by performing intra prediction of the first sub-block using a pixel value of the reference sub-block and the intra prediction mode information of the first sub-block; and
a second prediction unit (911) which determines a second sub-block on which intra prediction is to be performed, on the basis of the intra prediction processing operation information and outputs an intra prediction sample by performing intra prediction of the second sub-block using a pixel value of the reference sub-block and the intra prediction mode information of the second sub-block, and
wherein the adder (920, 921) includes:
a first adder (920) which corresponds to the first prediction unit (910); and
a second adder (921) which corresponds to the second prediction unit (911).

16. A method of increasing intra prediction speed, comprising:
determining, on the basis of intra prediction processing operation information of a macro block, a sub-block on which intra prediction is to be performed;
performing intra prediction of the determined sub-block using at least one intra prediction mode so as to detect intra prediction samples thereof;
calculating sum absolute errors (SAE) for each of the at least one intra prediction modes using each of the detected intra prediction samples and a current pixel value of a corresponding sub-block;
detecting a minimum SAE value from among the SAE values;
adding an intra prediction sample which has the minimum SAE value and a corresponding residual value;
reforming a pixel value of the determined sub-block using the added value;
generating a pixel value of a reference sub-block for a next intra prediction processing operation using the reformed pixel value; and
updating the intra prediction processing operation information of the macro block.

17. The method of claim 16, wherein the determined sub-block is a sub-block for which the intra prediction of reference sub-blocks required for the intra prediction is finished, and is included in the macro block.

18. An intra prediction method, comprising:
determining, on the basis of intra prediction processing operation information on a macro block, at least one sub-block on which intra prediction is to be performed;
performing intra prediction on the determined at least one sub-block to yield an intra prediction sample;
reforming a pixel value of the determined at least one sub-block by adding a residual value of the determined at least one sub-block to the intra prediction sample,
generating a reformed pixel value as a pixel value of a reference sub-block for a next intra prediction processing operation; and
updating the intra prediction processing operation information on the pixel value of the reference sub-block using the reformed pixel value.
